(19) Europäisches Patentamt
European Patent Office
Office européen des brevets

(11) Veröffentlichungsnummer: **0 092 655 B1**

# (12) EUROPÄISCHE PATENTSCHRIFT

(45) Veröffentlichungstag der Patentschrift: **19.06.85**

(51) Int. Cl.⁴: **B 27 K 3/15** // C08C19/40

(21) Anmeldenummer: **83101606.8**

(22) Anmeldetag: **19.02.83**

(54) **Wässriges Behandlungsmittel für Holz.**

(30) Priorität: **17.04.82 DE 3214196**

(43) Veröffentlichungstag der Anmeldung: **02.11.83 Patentblatt 83/44**

(45) Bekanntmachung des Hinweises auf die Patenterteilung: **19.06.85 Patentblatt 85/25**

(84) Benannte Vertragsstaaten: **AT BE CH DE FR GB IT LI NL SE**

(56) Entgegenhaltungen:
**EP - A - 0 009 546**
**EP - A - 0 043 901**
**DE - A - 2 828 014**

**Die Akte enthält technische Angaben, die nach dem Eingang der Anmeldung eingereicht wurden und die nicht in dieser Patentschrift enthalten sind.**

(73) Patentinhaber: **CHEMISCHE WERKE HÜLS AG, - RSP Patente / PB 15 - Postfach 13 20, D-4370 Marl 1 (DE)**

(72) Erfinder: **Zagefka, Hans-Dieter, Dr., Im Dahläckern 11, D-4358 Haltern (DE)**
Erfinder: **Bartz, Wilfried, Dr., Am Alten Sportplatz 17 a, D-4370 Marl (DE)**

**EP 0 092 655 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Anmeldung betrifft ein Behandlungsmittel gemäß dem Oberbegriff des Patentanspruchs.

Unter Holz werden alle Arten von Holz und Holzwerkstoffen, welche eine offenporige, den Applikationsmethoden der Imprägniertechnik zugängliche Struktur aufweisen, verstanden.

Unter Holzschutzmitteln werden holzschützende biozide, in erster Linie insektizide und/oder fungizide Wirkstoffe verstanden.

Die Anmeldung führt hin zur Imprägniertechnik von Holz und verwandten Techniken. Dabei wird ein wirksamer und dauerhafter Holzschutz angestrebt. In diesem Zusammenhang wird es als wichtig angesehen, das Bindemittel und das Holzschutzmittel in ausreichender Konzentration tief in die zu schützenden Holzteile zu transportieren (Penetration) und dort zu fixieren. Dabei kann unter Umständen zusätzlich eine dekorative Funktion in der Oberfläche des Holzes erzielt werden.

Die Anmeldung führt nicht hin zur Lackiertechnik von Holz. Dort wird ausschließlich eine dekorative Funktion in der Holzoberfläche, jedenfalls keine Tiefenwirkung, angestrebt.

Auf dem Gebiet der Anmeldung ist bereits die EP-A1-0 043 901 äquivalent mit der DE-OS 30 26 300 bekannt. Als Holzschutzmittel in den dort beschriebenen Behandlungsmitteln (Imprägnierungsmitteln) für Holz werden u. a. Gemische von wasserlöslichen, anorgansichen Holzschutzmitteln und (praktisch) nicht wasserlöslichen, organsichen Holzschutzmitteln genannt.

Die nicht wasserlöslichen Holzschutzmittel können auch nach vorheriger Lösung in wasserverträglichen, organischen Lösemitteln, wie niederen Alkoholen und Ketonen, nur in einer vergleichsweise geringen Konzentration in den wäßrigen Lösungen der Bindemittel, so wie sie bei der Herstellung anfallen, gelöst werden. Dementsprechend ist die mit den so erhaltenen Behandlungsmitteln des geschilderten Standes der Technik erreichbare Konzentration des nicht wasserlöslichen Holzschutzmittels in den behandelten Holzteilen vergleichsweise gering. Die erzielbare holzschützende Wirkung wird daher den Anforderungen der Praxis nicht immer gerecht.

Die Aufgabe bestand darin, diesen Mangel zu überwinden und ein verbessertes Behandlungsmittel für Holz bereitzustellen, das es gestattet, das Bindemittel und das Holzschutzmittel durch übliche Behandlungsverfahren in ausreichender Konzentration tief in die zu schützenden Holzteile zu transportieren und dort zu fixieren.

Die Aufgabe wurde überraschenderweise durch das Behandlungsmittel gemäß dem Patentanspruch gelöst.

Der Fachmann konnte weder aus dem geschilderten, nächstliegenden Stand der Technik noch aus in den DE-OS 3 004 319 und 3 014 194 offenbarten, entfernteren Stand der Technik (als Bindemittel werden wasserverdünnbare Alkydharze genannt) Anregungen zur Lösung der anmeldungsgemäßen Aufgabe entnehmen. Zwar ist es gemäß den zuletzt genannten DE-OS möglich, Behandlungsmittel mit vergleichsweise hohem Gehalt an nicht wasserlöslichen, organischen Holzschutzmitteln bereitzustellen. Jedoch wird die mit diesen Behandlungsmitteln erreichbare Konzentration des Holzschutzmittels in den behandelten Holzteilen den Anforderungen der Praxis nicht immer gerecht.

Siehe Vergleichsbeispiel (Behandlungsmittel A gemäß DE-OS 3 014 194), welches die Pentachlorphenol-Aufnahme imprägnierter Prüfkörper zum Gegenstand hat.

Die anmeldungsgemäßen Behandlungsmittel erfüllen die Voraussetzungen für einen wirksamen und dauerhaften Holzschutz. Sie übertreffen die Behandlungsmittel des in der DE-OS 3 026 300 offenbarten, nächstliegenden Standes der Technik in dem deutlich geringeren Ausmaß der Wasseraufnahme von imprägnierten Prüfkörpern. Demtentsprechend ist zur erwarten, daß sie die Behandlungsmittel des genannten Standes der Technik auch in der Fähigkeit übertreffen, die Feuchtigkeitsaufnahme und -abgabe des behandelten Holzes zu regulieren, so daß unter den Umweltbedingungen die durch Spannungen im Holz ausgelöste Rißbildung vermieden wird.

Die in den Behandlungsmitteln enthaltenden Bindemittel sind zum großen Teil bekannt und können nach bekannten Methoden hergestellt werden (DE-PS 2 838 930, DE-OS 2 911 243, 3 026 300 und 3 200 782).

Die Basispolymerisate für die Herstellung des Bindemittels weisen vorzugsweise $\geq$ 90 Mol-% Struktureinheiten auf, die durch Polymerisation von 1,3-Butadien, und $\leq$ 10 Mol-% Struktureinheiten auf, die durch Polymerisation von anderen copolymerisierbaren 1,3-Diolefinen und $\alpha$-ungesättigten Monoolefinen erhalten sind. Die Homopolymerisate des 1,3-Butadiens sind besonders bevorzugt.

Bevorzugte Comonomere sind 1,3-Diolefine, wie beispielsweise Isopren und 1,3-Pentadien. Ein Beispiel für ein copolymerisierbares, $\alpha$-ungesättigtes Monoolefin ist Styrol.

Die Basispolymerisate lassen sich nach bekannten Verfahren, wie sie in den DE-PS 1 186 631, 1 212 302, 1 241 119, 1 251 537, 1 292 853, 2 029 416, 2 122 936 und der DE-AS 2 361 782 beschrieben sind, herstellen.

Die relative Molekülmasse ($\bar{M}_n$), durch welche das Basispolymerisat charakterisiert wird, wird dampfdruckosmometrisch bestimmt. Sie beträgt vorzugsweise 800 bis 3000.

In den Homo- oder Copolymerisaten liegen vorzugsweise < 40% der olefinischen Doppelbindungen in trans-Struktur vor. Von diesen Polymerisaten sind solche ganz besonders bevorzugt, bei denen zugleich $\geq$ 40% der olefinischen Doppelbindungen in cis-Struktur vorliegen.

Die Basispolymerisate können direkt, so wie sie bei der Herstellung anfallen, für die anschließende

Funtionalisierung eingesetzt werden. Sie können aber auch vor — und unter Umständen auch nach — der Funktionalisierung in bekannter Weise durch Isomerisierung, partielle Cyclisierung oder partielle Hydrierung modifiziert werden. Die unmodifizierten Polymerisate sind besonders bevorzugt.

Auf dem Weg zu den Bindemitteln können die Aminogruppen nach verschiedenen bekannten Methoden in die 1,3-Butadienpolymerisate eingeführt werden.

So führt ein bevorzugter Weg I über die Anlagerung von $\alpha$, $\beta$-ungesättigten Dicarbonsäuren oder ihren Anhydriden und gegebenenfalls die Modifizierung der Additionsprodukte durch partielle Cyclisierung (DE-OS 3 014 196) und die anschließende Umsetzung der Additionsprodukte mit einem primär/tertiären Alkylendiamin(gemisch) zu Aminodicarbonsäureimid-Additionsprodukten (DE-PS 2 838 930, Spalte 7, Beispiele 1 und 2).

Den eingangs erhaltenen Anlagerungsprodukten liegen im allgemeinen 16 bis 25, vorzugsweise 18 bis 24 Massen-% Maleinsäureanhydrid (MSA) und 84 bis 75, vorzugsweise 82 bis 76 Massen-% eines Polybutadiens mit einer relativen Molekülmasse ($\bar{M}_n$) zwischen 800 bis 2000, einer Iodzahl von $\geq$ 350 [g Iod/100 g] und einem cis-Doppelbindungsgehalt von $\geq$ 70%, bezogen auf den gesamten Doppelbindungsgehalt, zugrunde.

Die primär/tertiären Alkylendiamine entsprechen der allgemeinen Formel

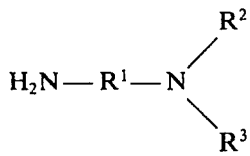

(I)

in der $R^1$ ein $C_2$- bis $C_8$-Alkylenrest, und $R^2$ und $R_3$ unabhängig voneinander $C_1$- bis $C_6$-Alkylreste, die mit einer $C_1$- bis $C_4$-Alkoxygruppe substituiert sein können, wobei die $\alpha$-Stellung zum N-Atom ausgenommen ist, oder gemeinsam $-(CH_2)_5-$ oder $-(CH_2)_2-O-(CH_2)_2-$, d. h. Teil eines Ringes, sind.

Die Summe der C-Atome in den Resten $R^2$ und $R^3$ ist vorzugsweise $\leq$ 8.

Geeignete Diamine der allgemeinen Formel I sind beispielsweise:

N,N-Dimethyl-ethylendiamin-(1,2),
N,N-Diethyl-ethylendiamin-(1,2),
N,N-Dimethyl-propylendiamin-(1,3),
N,N-Diethyl-propylendiamin-(1,3),
N,N-Diethyl-tetramethylendiamin-(1,4),
2,2,N,N-Tetramethyl-propylendiamin-(1,3),
1-Diethylamino-4-methyl-tetramethylendiamin-(1,4),
N-(3-Aminopropyl)-morpholin und
N-(3-Aminopropyl)-piperidin. Bevorzugt ist N,N-Dimethylpropylendiamin-(1,3).

Ein Teil der Diamins kann durch $NH_3$ oder ein primäres $C_1$- bis $C_6$-(Cyclo)alkylamin, dessen (Cyclo)alkylrest durch eine $C_1$- bis $C_4$-Alkoxygruppe substituiert sein kann, wobei die $\alpha$-Stellung zum N-Atom ausgenommen ist, ersetzt sein.

Die auf dem Weg I erhaltenen Bindemittel haben vorzugsweise einen Gehalt von $\geq$ 120 bis 300 mg-Atom titrierbarem Aminstickstoff/100 g.

Ein bevorzugter Weg II führt über Epoxidgruppen enthaltende 1,3-Butadienpolymerisate. Diese können beispielsweise durch terminale Funktionalisierung von im Living-Polymerisation-Prozeß erhaltenen Polymerisaten mit Epichlorhydrin hergestellt werden. Derartige Polymerisate mit endständigen Epoxidgruppen sind handelsüblich.

Sie können auch durch Epoxidierung von 1,3-Butadienpolymerisaten erhalten werden (DE-PS 2 838 930, Spalte 7, Zeile 57 bis Spalte 8, Zeile 5), wobei gegebenenfalls auch Vinylgruppen epoxidiert werden.

Der Gehalt der Polymerisate an titrierbarem Epoxidsauerstoff (DIN 16 945) beträgt im allgemeinen 3 bis 9, vorzugsweise 4 bis 8 Massen-%.

Die Aminierung der Epoxidgruppen enthaltenden 1,3-Butadienpolymerisate ist bekannt (DE-PS 28 38 930, Beispiele 3 bis 7; DE-OS 29 11 243 und 30 26 300; siehe auch DE-Patentanmeldung P 32 00 782).

Geeignete Amine entsprechen den allgemeinen Formeln II (Diamine) und III (Monoamine).

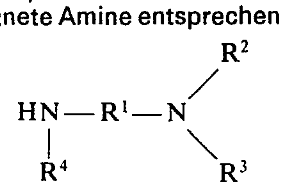

(II)

$R^1$ bis $R^3$ haben die oben im Zusammenhang mit der allgemeinen Formel I angegebene Bedeutung.

$R^2$ und $R^3$ können auch unabhängig voneinander $C_1$- bis $C_6$-Alkylreste sein, die mit einer Hydroxyl-

gruppe substituiert sind, wobei die α-Stellung zum N-Atom ausgenommen ist.

$R^4$ ist ein Wasserstoffatom oder ein $C_1$- bis $C_6$-Alkylrest, der mit einer Hydroxyl- oder $C_1$- bis $C_4$-Alkoxygruppe substituiert sein kann, wobei die α-Stellung zum N-Atom ausgenommen ist.

Geeignete Diamine der allgemeinen Formel II sind Falle $R^4$ gleich H (primär/tertiäre Alkylendiamine) beispielsweise die im Zusammenhang mit der allgemeinen Formel I genannten Diamine sowie N,N-Bis-(2-hydroxyethyl)-propylendiamin-(1,3).

Geeignete Diamine der allgemeinen Formel II sind im Falle $R^4$ ungleich H (sekundär/tertiäre Alkylendiamine) beispielsweise 1-Methylpiperazin und 1-(β-Hydroxyethyl)-piperazin.

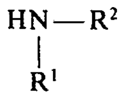

(III)

$R^1$ ist ein Wasserstoffatom oder ein $C_1$- bis $C_6$-Alkylrest, der mit einer Hydroxylgruppe oder einer $C_1$- bis $C_4$- Alkoxygruppe substituiert sein kann, wobei die α-Stellung zum N-Atom ausgenommen ist.

$R^2$ ist ein $C_1$- bis $C_6$-(Cyclo)alkylrest, der mit einer Hydroxylgruppe oder einer $C_1$- bis $C_4$-Alkoxygruppe substituiert sein kann, wobei die α-Stellung zum N-Atom ausgenommen ist.

$R^1$ und $R^2$ können auch gemeinsam $-(CH_2)_5-$ oder $-(CH_2)_2-O-(CH_2)_2-$, d. h. Teil eines Ringes, sein.

Die Summe der C-Atome in den Resten $R^1$ und $R_2$ ist vorzugsweise $\leq 8$.

Geeignete Monamine der allgemeinen Formel III sind beispielsweise im Falle $R^1$ gleich H (primäre Amine): Methylamin, Ethylamin, Propylamine, Butylamine, Pentylamine, Hexylamine, 2-Amino-3-methylbutan, 2-Methoxyethylamin, 3-Methoxypropylamin, 3-Ethoxypropylamin, Cyclohexylamin, Ethanolamin, 2-Hydroxypropylamin, 3-Hydroxypropylamin und Isopropanolamin, und im Falle $R^1$ ungleich H (sekundäre Amine): Dimethylamin, Diethylamin, Dipropylamin, Diisopropylamin, Dibutylamin, Diisobutylamin, Di-s-butylamin, N-Methylethylamin, N-Methyl-butylamin, N-Methyl-s-butylamin, N-Ethylbutylamin, Bis-(2-methoxyethyl)-amin, Bis-(3-methoxypropyl)-amin, N-Methyl-cyclohexylamin, Diethanolamin, Diisopropanolamin, N-Methyl-ethanolamin, 1-Ethylamino-butanol-(2), Piperidin und Morpholin.

Die sekundären Amine sind bevorzugt: Diethanolamin ist besonders bevorzugt.

Die Menge des insgesamt angebotenen Amins kann äquimolar in bezug auf den Gehalt an Epoxidgruppen im epoxidierten Polymerisat sein. Es ist auch möglich, Amin im Überschuß zu verwenden und den nicht umgesetzten Anteil an Amin nach der Umsetzung wieder zu entfernen. Das Amin kann auch im Unterschuß zugegeben werden, so daß einige der Epoxid-Ringe unverändert erhalten bleiben.

Die auf dem Weg II erhaltenen Bindemittel haben vorzugsweise einen Gehalt von $\geq$ 100 bis 300 mg-Atom titrierbarem Aminstickstoff/100 g.

Mit steigendem Aminogruppengehalt nimmt die Wasserlöslichkeit des mit Säuren neutralisierten Bindemittels und die Stabilität der wäßrigen Bindemittellösungen zu. Löslichkeit und Stabilität können auch dadurch verbessert werden, daß man Aminogruppen einführt, die hydrophile Substituenten tragen, wobei quartäre Ammoniumgruppen ausgeschlossen sind.

Die so erhaltenen Additionsprodukte werden durch Neutralisation bzw. Teilneutralisation mit Säuren bzw. Gemischen von Säuren in die wasserlösliche bzw. wasserdispergierbare Form übergeführt. Als Säuren sind anorgansiche Säuren, wie beispielsweise Schwefel-, Salz- und Kohlensäure, und organsiche Säuren, wie beispielsweise Ameisen-, Essig-,Propion- und Milchsäure, geeignet.

Vorzugsweise werden biozide Säuren, wie beispielsweise Fluß-, Hexafluorkiesel-, Phosphor-, Bor-, Arsen-, Benzoe-, Salicylsäure und phosphorige Säure, oder biozide saure Salze, wie beispielsweise Kaliumhydrogenfluorid, oder gegebenenfalls solche Säuren eingesetzt, welche mit Metallionen Komplexe bilden, wie beispielsweise Weinsäure oder Ethylendiamintetraessigsäure.

Um eine ausreichende Löslichkeit bzw. Dispergierbarkeit des Bindemittels in Wasser zu erreichen, muß die zugegebene Säuremenge genügend hoch gewählt werden. Je höher die Konzentration der Aminogruppen im Bindemittel ist, desto geringere Neutralisationsgrade können zur Erreichung des gewünschten Effektes eingestellt werden. In der Regel liegt die erforderliche Mindestmenge an Säure bei 0,3 bis 0,5 Äquivalenten Säure/Äquivalent Aminogruppen. Mit steigender Säuremenge steigt die Stabilität der wäßrigen Bindemittellösung, was sich z. B. durch eine bessere Verträglichkeit gegenüber üblichen Zusatzstoffen, wie sie in dem erfindungsgemäßen Behandlungsmittel enthalten sein können, und durch eine erhöhte Penetrationsfähigkeit zu erkennen gibt.

So kann es unter Umständen zweckmäßig sein, 5 und mehr Äquivalente Säure/Äquivalent Aminogruppe einzusetzen. Gerade in diesen Fällen ist es dann zweckmäßig, zumindest teilweise biozide Säuren einzusetzen.

Die Behandlungsmittel weisen vorzugsweise einen pH-Wert von 3 bis 7 auf.

Geeignete, nicht wasserlösliche, organsiche Holzschutzmittel sind beispielsweise 2,5-Dimethylfuran-3-carbonsäure-N-methoxy-N-cyclohexylamid, Tributylzinnbenzoat, Tributylzinnnaphthenat, δ-Hexachlorcyclohexan, Pentachlorphenol, 2-Mercaptobenzthiadiazol-2, Methoxycarbonylaminobenzimidazol, N,N-Dimethyl-N'-phenyl-N'-(fluordichlormethylthio)-sulfamid. N,N-Dimethyl-N'-p-tolyl-N'-(fluordichlormethylthio)-sulfamid, Carbamate, Dithiocarbamate, Phosphorsäureester, Phosphorsäureester, Thiophosphorsäureester, Dithiophosphorsäureester, Thionophosphorsäureester, o-Phenylphenol, Hydroxychinolinderivate, Endosulfan und Pyrethroide.

Geeignete, wasserlösliche Holzschutzmittel sind beispielsweise Alkalifluoride, Silicofluoride, wie $MgSiF_6$, Alkaliarsenate, Borate und Salze des Bleis, Zinns, Cadmiums, Nickels, Kobalts, Mangans, Kupfers, Quecksilbers, Zinks und dreiwertigen Chroms, sowie ($C_{12}$- bis $C_{14}$-Alkyl)-benzyldimethylammoniumchlorid.

Zur Herstellung der erfindungsgemäßen Behandlungsmittel kann der sauren, wäßrigen Lösung oder Dispersion des Bindemittels, welche gegebenenfalls ein wasserlösliches Holzschutzmittel enthält, ein nicht wasserlösliches, organisches Holzschutzmittel, das in einem wasserverträglichen Lösemittel gelöst sein kann, zugesetzt werden. In der Regel ist es jedoch zweckmäßig, zunächst das nicht wasserlösliche Holzschutzmittel dem Bindemittel zuzusetzen, dieses durch den weiteren Zusatz von Säure in die Salzform zu überführen und schließlich durch Zugabe von Wasser, gegebenenfalls zusammen mit einem weiteren, wasserlöslichen Holzschutzmittel, das Behandlungsmittel fertigzustellen.

Geeignete Zusatzstoffe gemäß Merkmal 3 des Patentanspruchs sind beispielsweise Pigmente, Hautverhütungsmittel, Stabilisatoren, Sikkative, oberflächenaktive Stoffe, Viskositätsregulatoren und wasserverträgliche Lösemittel.

Geeignete, wasserverträgliche Lösemittel sind beispielsweise Isopropanol, Butanole, Diacetonalkohol, Alkylzellosolven und Dimethylether von Glykolen. Die Lösemittel können in Mengen von bis zu 100 Massenteilen, bezogen auf 100 Massenteile Bindemittel, eingesetzt werden. Vorzugsweise wird ohne Lösemittel gearbeitet.

Unter den auszuschließenden, porenverschließenden Zusätzen werden solche Zusätze verstanden, welche aufgrund ihrer Art und ihrer Konzentration im Behandlungsmittel bei der Applikation einen Porenverschluß des Holzes herbeiführen und dadurch die angestrebte Tiefenwirkung des Behandlungsmittels wesentlich behindern würden.

Zusatzstoffe der beschriebenen Art können in praxisüblichen Mengen zugemischt werden. Die Art und Menge solcher Zuschläge richten sich stets nach dem jeweilig zu behandelnden Werkstoff, seinem Verwendungszweck sowie dem Behandlungsverfahren und sind durch wenige orientierende Versuche leicht zu ermitteln.

Da die in den erfindungsgemäßen Behandlungsmitteln eingesetzten Bindemittel oxidativ trocknende Eigenschaften besitzen, ist es im allgemeinen nicht erforderlich, ihnen weitere Harze als Vernetzungsmittel zuzusetzen. Selbstverständlich können weitere Bindemittel, welche — gegebenenfalls bei Wärmebehandlung — als Vernetzungsmittel wirken, wie beispielsweise wasserlösliche bzw. -dispergierbare Aminoplaste oder Phenolharze, mitverwendet werden, sofern der im Sinne der Aufgabenstellung der vorliegenden Erfindung angestrebte Effekt erreicht wird.

Die erfindungsgemäßen Behandlungsmittel haben im allgemeinen einen Bindemittelgehalt von 1 bis 40, vorzugsweise 5 bis 30 Masssen-%, und können nach allen bekannten Verfahren des Standes der Technik (vgl. DIN 68 800, Blatt 3) appliziert werden. Dabei ist die erzielbare Schutzwirkung — wie dem Fachmann bekannt ist — eng mit dem Behandlungsverfahren verknüpft.

Besonders wirksam ist ein Imprägnierverfahren, bei dem das Holz, gegebenenfalls unter Druck oder Vakuum, einer Volltränkung unterworfen wird.

Die folgenden Beispiele dienen zur Erläuterung der Erfindung. Unter Teilen werden Massenteile und unter Prozenten Massenprozente verstanden, falls nicht anders angegeben.

## Beispiele

Als Basispolymerisat zur Herstellung der in den erfindungsgemäßen Behandlungsmitteln eingesetzten Bindemittel wurde ein Polybutadien eingesetzt, das wie folgt charakterisiert ist:

$\bar{M}_n$ (dampfdruckosmometrisch bestimmt in Chlorbenzol): ca. 1700
Iodzahl [g Iod/100 g] (DIN 53 241): 445
Doppelbindungsverteilung (IR-Analyse) in %, bezogen auf die gesamten Doppelbindungen:
73 cis und 25 trans (in Struktureinheiten, die durch 1,4-Polymerisation von 1,3-Butadien erhalten sind);
2 Vinyl (in Struktureinheiten, die durch 1,2-Polymerisation von 1,3-Butadien erhalten sind).
Visokisität [Pa · s] (DIN 53 214, 20° C): 0,8

Die Aminogruppen tragenden Polymerisate (Aminaddukte) wurden auf zwei Wegen hergestellt.

Weg I (Aminaddukt 1)

Aus 1462 Teilen des Polybutadiens, 388 Teilen MSA (≙ 21% MSA im Polybutadien-MSA-Anlagerungsprodukt) und 485 Teilen N,N-Dimethyl-propylendiamin-(1,3) wurde das Aminaddukt 1 in bekannter Weise (DE-PS 28 38 930, Spalte 7, Beispiel 1) hergestellt.

Säurezahl: < 3 mg KOH/g
185 mg-Atom titrierbarer Aminstickstoff/100 g

Nach Zugabe von 18 Teilen 50%iger Essigsäure zu 100 Teilen Aminaddukt 1 wurde eine Mischung erhalten, die mit Wasser unbegrenzt verdünnbar ist.

Weg II (Aminaddukte 2 bis 4)

Das Polybutadien wurde in bekannter Weise mit 60%igem $H_2O_2$ in Gegenwart von Ameisensäure epoxidiert (DE-PS 28 38 930, Spalte 7, Zeile 60 bis Spalte 8, Zeile 5). Das erhaltene, epoxidierte Polybutadien ist wie folgt charakterisiert:

Gesamtsauerstoff [%] (Elementaranalyse): 8,0
Epoxidsauerstoff [%] (DIN 16 945): 5,9
Viskosität [Pa · s] (DIN 53 214, 20°C): 7.2

4708 Teile des epoxidierten Polybutadiens wurden unter Stickstoffatmosphäre mit 872 Teilen Diethanolamin gemischt und unter Rühren auf 190°C erhitzt. Nach 6 h war die Reaktion beendet. Das erhaltene Aminaddukt 2 ist wie folgt charakterisiert:

Restepoxidsauerstoff [%]: 2,5
145 mg-Atom titrierbarer Aminstickstoff/100 g.

Analog wurde das Aminaddukt 3 erhalten.

Restepoxidsauerstoff [%]: 0,7
232 mg-Atom titrierbarer Aminstickstoff/100 g.

Analog wurde das Aminaddukt 4 erhalten, wobei jedoch anstatt Diethanolamin N,N-Dimethyl-propylendiamin-(1,3) eingesetzt wurde.

Restepoxidsauerstoff [%]: 2,6
292 mg-Atom titrierbarer Aminstickstoff/100 g.

Herstellung der Behandlungsmittel 1 bis 4 (erfindungsgemäß) und A (gemäß DE-OS 30 14 194)

32 Teile Aminaddukt 1, 14,6 Teile Pentachlorphenol (PCP) und 14,5 Teile Milchsäure wurden bei ca. 70°C gemischt. Nach Zugabe von 314 Teilen Wasser wurde eine hellbraune, leicht milchige Emulsion erhalten

(Behandlungsmittel 1):
pH-Wert: 2,5
Feststoffgehalt [%]: 15,8
PCP-Gehalt [%]: 3,9

31,5 Teile Aminaddukt 2, 14,4 Teile PCP und 6 Teile 73%ige Milchsäure wurden bei ca. 70°C gemischt. Nach Zugabe von 307 Teilen Wasser wurde eine hellgraue, leicht trübe Lösung erhalten

(Behandlungsmittel 2):
pH-Wert: 3,9
Feststoffgehalt [%]: 14,0
PCP-Gehalt [%]: 4,0

36,1 Teile Aminaddukt 3, 17,3 Teile PCP und 7,5 Teile Milchsäure wurden bei ca. 70°C gemischt. Nach Zugabe von 374 Teilen Wasser wurde eine hellbraune, klare Lösung erhalten

(Behandlungsmittel 3):
pH-Wert: 3,5
Feststoffgehalt [%]: 14,0
PCP-Gehalt [%]: 4,0

32,2 Teile Aminaddukt 4, 14,7 Teile PCP und 9,0 Teile 50%iger wäßriger Phosphorsäure wurden bei ca. 70° C gemischt. Nach Zugabe von 312 Teilen Wasser wurde eine grau-braune Emulsion erhalten

(Behandlungsmittel 4):
ph-Wert: 3,8
Feststoffgehalt [%]: 14,0
PCP-Gehalt [%]: 4,0

75 Teile eines gemäß DE-OS 30 14 194 hergestellten, wasserverdünnbaren Alkydharzes (63%ig in Butylglykol), 4 Teile Triethylamin und 26 Teile 10%iger wäßriger Natronlauge wurden gemischt (neutralisiertes Alkylharz). Dieser Mischung wurden 23 Teile PCP und 10 Teile eines Additionsproduktes aus Ethylenoxid und Nonylphenol (Molverhältnis 10 :1) zugesetzt. Sodann wurde mit Wasser verdünnt

(Behandlungsmittel A):
pH-Wert: 8,3
Feststoffgehalt [%]: 15,1
PCP-Gehalt [%]: 4,0

Imprägnierversuche

Die Imprägnierversuche wurden mit Kiefernsplintholzklötzchen (14 × 22 × 50 mm, Prüfkörper) nach dem Volltränkverfahren (DIN 52 160, S. 2 und 3) durchgeführt. Die Ergebnisse sind in der folgenden Tabelle zusammengestellt.

Tabelle: Imprägnierversuche

| Behandlungsmittel | Trockenaufnahme [%] gesamt | PCP | relative Trockenaufnahme [%] |
|---|---|---|---|
| 1 | 34,9 | 8,5 | 15,6 |
| 2 | 31,9 | 9,1 | 14,2 |
| 3 | 32,1 | 9,1 | 13,8 |
| 4 | 31,6 | 9,1 | 14,0 |
| A | 12,2 | 3,6 | 15,5 |

Die Bestimmung der Trockenaufnahme bzw. der relativen Trockenaufnahme der Prüfkörper erfolgte nach den Gleichungen:

$$\text{Trockenaufnahme [\%]} = \frac{W-T}{T} \cdot 100;$$

$$\text{relative Trockenaufnahme [\%]} = \frac{W-T}{I-T} \cdot 100$$

mit W = Masse des Holzes, imprägniert, getrocknet
T = Masse des Holzes, unbehandelt, getrocknet
I = Masse des Holzes, imprägniert, ohne Trocknung.

Zur Berechnung der PCP-Trockenaufnahme der Prüfkörper wurde W indirekt durch Bestimmung der restlichen PCP-Menge im Behandlungsmittel nach der Imprägnierung bestimmt.

Wie aus der Tabelle zu ersehen ist, entspricht die relative Trockenaufnahme jeweils gut dem Feststoffgehalt des Behandlungsmittels. Zum anderen zeigt die analytische Untersuchung der zur Imprägnierung der Prüfkörper benutzten, überschüssigen Lösung, daß durch die Behandlung die

Zusammensetzung der Behandlungsmittel nicht verändert wird. Hieraus ist ersichtlich, daß sowohl das Bindemittel als auch das Holzschutzmittel in die Prüfkörper penetrieren.

Werden die mit den erfindungsgemäßen Behandlungsmitteln 1 bis 4 imprägnierten Prüfkörper aufeinander gestapelt, kleben sie an den Berührungsflächen nicht zusammen, d. h. das Bindemittel zeigt das geforderte Penetrationsverhalten und wird nicht an der Oberfläche der Prüfkörper abgeschieden.

Des weiteren ist aus der Tabelle ersichtlich, daß mit den erfindungsgemäßen Behandlungsmitteln 1 bis 4 erheblich größere PCP-Anteile in die Prüfkörper eingebracht werden können als mit dem zum Vergleich eingesetzten Behandlungsmittel A (PCP-Trockenaufnahme).

Die erfindungsgemäßen Behandlungsmittel übertreffen auch entsprechende Behandlungsmittel des in der DE-OS 30 26 300 offenbarten nächstliegenden Standes der Technik, da diese nicht einmal die Voraussetzung eines guten Aufnahmevermögens für das nicht wasserlösliche Holzschutzmittel (erreichbare Konzentration desselben im wäßrigen Behandlungsmittel) erfüllen.

## Patentanspruch

Wäßriges Behandlungsmittel für Holz, enthaltend

1) ein wasserlösliches oder wasserdispergierbares, oxidativ trocknendes Bindemittel, welches einen Doppelbindungsgehalt entsprechend einer Iodzahl von $\geq$ 100 [g Iod/100 g] aufweist, auf Basis eines gegebenenfalls durch Isomerisierung, partielle Cyclisierung oder partielle Hydrierung modifizierten 1,3-Butadienpolymerisates, wobei dieses $\geq$ 70 Mol-% Struktureinheiten, die durch Polymerisation von 1,3-Butadien und $\leq$ 30 Mol-% Struktureinheiten, die durch Polymerisation von anderen copolymerisierbaren 1,3-Diolefinen und $\alpha$-ungesättigten Monoolefinen erhalten sind, und eine relative Molekülmasse ($\bar{M}_n$) von 500 bis 6000 aufweist,
2) ein nicht wasserlösliches, organisches Holzschutzmittel(gemisch) und gegebenenfalls zusätzlich ein wasserlösliches Holzschutzmittel(gemisch), und
3) gegebenenfalls in der Imprägnier- und Lackiertechnik übliche Zusatzstoffe, wobei porenverschließende Zusätze ausgeschlossen sind,
dadurch gekennzeichnet, daß
4) das Bindemittel das zusätzliche Kriterium erfüllt, daß es ein Aminogruppen, jedoch keine quartären Ammoniumgruppen tragendes Polymerisat mit einem Gehalt von > 50 bis 600 mg-Atom titrierbarem Aminstickstoff/100 g ist, und
5) das Behandlungsmittel Säure enthält und einen pH-Wert von 2 bis 8 aufweist, wobei die Säurestärke und Säuremenge (Neutralisationsgrad) einerseits und die Basizität und Menge der Aminogruppen andererseits so aufeinander abgestimmt sind, daß das Bindemittel wasserlöslich oder wasserdispergierbar ist.

Werden die mit den erfindungsgemäßen Behandlungsmitteln 1 bis 4 imprägnierten Prüfkörper aufeinander gestapelt, kleben sie an den Berührungsflächen nicht zusammen, d. h. das Bindemittel zeigt das geforderte Penetrationsverhalten und wird nicht an der Oberfläche der Prüfkörper abgeschieden.

## Claim

An aqueous composition for treating wood containing

1) a water-soluble or water-dispersible, oxidatively drying binder which has a double-bond content corresponding to an iodine value of at least 100 [g iodine/100 g] and is based on a 1,3-butadiene polymer optionally modified by isomerisation, partial cyclisation or partial hydrogenation, the polymer having a relative molecular weight ($\bar{M}_n$) of 500 to 6000 and containing at least 70 mol% of units obtained by polymerisation of 1,3-butadiene and not more than 30 mol% of units obtained by polymersation of one or more other copolymerisable 1,3-diolefins and $\alpha$-monoolefins,
2) a water-insoluble organic wood preserving agent or mixture of agents and optionally also a watersoluble organic wood preserving agent or mixture of agents, and
3) optionally one or more additives conventional in the impregnating and coating industries, but excluding pore-closing additives,
characterised in that
4) the binder satisfies the additional criterion that it is a polymer carrying amino groups but not quaternary ammonium groups and containing from more than 50 up to 600 mg-atom of titratable amine nitrogen per 110 g, and

5) the composition contains acid and has a pH of from 2 to 8, the acid strength and amount of acid (degree of neutralisation) on the one hand and the amount of amino groups on the other hand being selected so that the binder is water-soluble or water-dispersible.

**Revendication**

Agent de traitement aqueux pour bois, contenant un liant soluble ou dispersible dans l'eau et séchant par oxydation, qui présente une teneur en doubles liaisons correspondant à un indice d'iode d'au moins 100 (g d'iode/100 g), à base d'un produit de polymérisation de 1,3-butadiène éventuellement modifié par isomérisation, cyclisation partielle ou hydrogénation partielle, celui-ci présentant au minimum 70 mol% d'unités structurales qui ont été obtenues par polymérisation de 1,3-butadiène et au maximum 30 mol% d'unités structurales qui ont été obtenues par polymérisation d'autres 1,3-dioléfines et mono-oléfines alphainsaturées copolymérisables et présentant une masse moléculaire relative ($\bar{M}_n$) de 500 à 6000, un agent ou mélanges d'agents organiques de protection du bois insolubles dans l'eau et éventuellement aussi un agent ou mélange d'agents hydrosolubles de protection du bois, et le cas échéant des additifs usuels dans la technique d'imprégnation et de peinturage, les additifs bouchant les pores étant exclus, caractérisé par le fait que le liant répond à ce critère supplémentaire qu'il est un produit de polymérisation portant des groupes amine, mais ne portant pas de groupes ammonium quaternaire, ayant une teneur de plus de 50 à 600-milli-atomes-grammes d'azote titrable de groupe amine par 100 g, et que l'agent de traitement contient de l'acide et présente un pH de 2 à 8, la force de l'acide et la quantité d'acide (degré de neutralisation), d'une part, et la basicité et la quantité des groupes amine, d'autre part, étant harmonisées entre elles de telle sorte que le liant est soluble ou dispersible dans l'eau.